# EUROPEAN PATENT SPECIFICATION

(11) **EP 1 245 263 B1**
(45) Date of publication and mention of the grant of the patent: **28.06.2006**
(21) Application number: 02007063.7
(22) Date of filing: 27.03.2002
(51) Int. Cl.: B01D 46/12, B01D 29/01, B01D 46/10, B01D 46/52

(54) **Fluid filtering member**
Fluidfilter
Filtre à fluid

(30) Priority: 29.03.2001 JP 2001094779
(43) Date of publication of application: 02.10.2002
(73) Proprietor: Kyosan Denki Co., Ltd., Sashima-gun, Ibaraki-pref., 306 (JP)
(72) Inventor: Koguchi, Yoshiichi, c/o Kyosan Denki Co., Ltd., Sashima-gun, Ibaraki-pref., 306 (JP)
(74) Representative: Winter, Brandl, Fürniss, Hübner Röss, Kaiser, Polte Partnerschaft Patent- und Rechtsanwaltskanzlei

(56) References cited:
- EP-A- 0 622 102
- EP-A- 0 955 078
- GB-A- 2 256 601
- US-A- 6 096 117
- US-A- 6 099 729

## Description

### INCORPORATION BY REFERENCE

The disclosure of Japanese Patent Application No. 2001-094779 filed on March 29, 2001 including the specification, drawings and abstract is incorporated herein by reference in its entirely.

### BACKGROUND OF THE INVENTION

### 1. Field of Invention

The invention relates to a fluid filtering member.

### 2. Description of Related Art

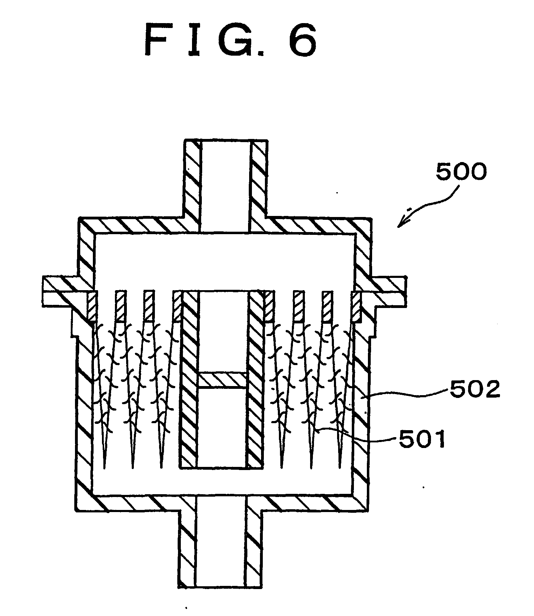

Art related to the invention is described with reference to Figs. 6 through 8.

Referring to Fig. 6, a fuel filtering device 500 mounted on a vehicle is provided with a fuel filtering member 501 in a spiral structure disposed in a filter case 502.

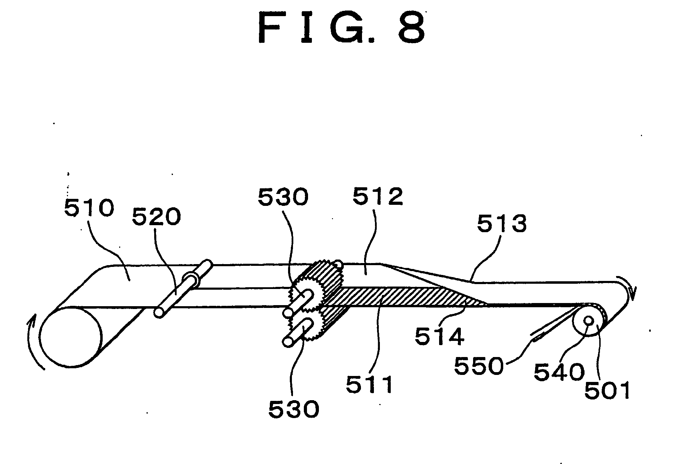

A manufacturing device illustrated in Fig. 8 is employed for manufacturing the fuel filtering member 501 and is supplied with a preprocessed filter material 510 as a rolled sheet at a left side of the manufacturing device (in the left in Fig. 8). At the beginning of a manufacturing process for manufacturing the fuel filtering member 501, the filter material 510 is primarily strained to a streaking means 520. The filter material 510 is applied with a pushing force of the streaking means 520 in a thickness direction of the filter material 510 at a central portion in a width direction thereof so as to be streaked at the central portion in the width direction thereof. Therefore, the filter material 510 can be easily folded along the streak.

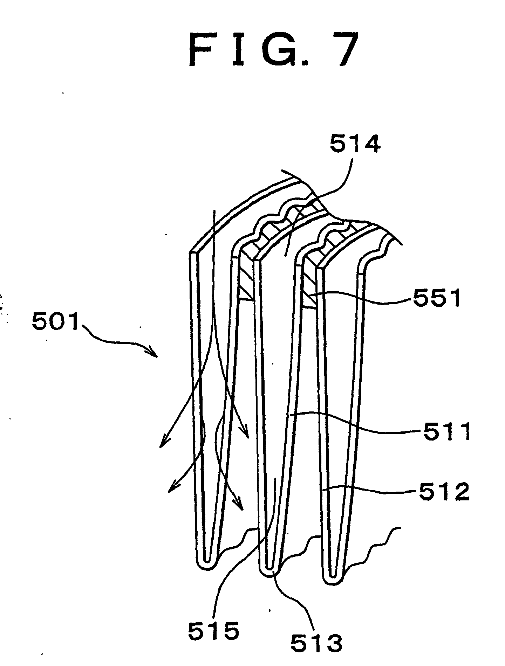

After the above described streaking process of the filter material 510, one side in the width direction of the filter material 510 is engageably meshed with a gear 530 from both sides in the thickness direction of the filter material 510 and is subject to a pushing force of the gear 530. Therefore, a corrugate (wave shape) 511 as a fuel passage is formed at the one side in the width direction of the filter material 510. The other side in the width direction of the filter material 510 is provided with a flat surface 512. A folded portion 513 is formed by folding the filter material 510 by a not-shown folding means along the streak at the central portion in the width direction of the filter material 510. The folded filter material 510 is then rolled by a core 540 in a spiral manner and is cut to a predetermined length so as to form the fuel filtering member 501. Further, an adhesive 551 (referring to Fig. 7) is applied by an adhesive applying means 550 to an inner side of the filter material 510 being rolled by the core 540 at a side having an opening portion 514. The opening portion 514 is arranged at an opposite side to the folded portion 513 in the width direction of the filter material 510. Therefore, relative surfaces of the filter material 510, i.e. the corrugate 511 and the flat surface 512 are adhered to each other by the adhesive 551 applied to the filter material 510.

Referring to Fig. 7, a fuel passage 515 is defined between the corrugate 511 and the flat surface 512 at the opening portion 514. As illustrated by an arrow in Fig. 7, the fluid introduced from the side of the opening portion 514 is filtered by the filter material 510 and is discharged from an opposite side of the filter material 510 in a width direction thereof.

Other art related to the present invention are described below with reference to Figs. 6-8 as appropriate.

A filter material having the corrugate 511 and another filter material having the flat surface 512 are prepared. An edge portion at one side in a width direction of the filter material having the corrugate 511 is adhered with an edge portion at one side in a width direction of the other filter material having the flat surface 512 so as to form a bottom portion of a fluid passage. The bottom portion of the fluid passage corresponds to the folded portion 513 of the above described related art. On the other hand, the opening portion 514 is defined between an edge portion at an opposite side in the width direction of the filter material having the corrugate 511 and an edge portion at an opposite side in the width direction of the filter material having the flat surface 512. An inner side of the two filter materials is applied with the adhesive 551 and is rolled by the core 540 in the same manner as the above described related art. Therefore, relative surfaces of the two filter materials are adhered by the adhesive 551 so as to form the fuel filtering member 501.

However, the above-described manufacturing process for manufacturing the fuel filtering member 510 causes the following drawbacks. Large-scale equipment may be required for processing the corrugate or for rolling the filter material and applying the adhesive 551 thereto. Further, the above complicated processes may lead to a high processing cost.

Further, the gear 530 is employed as a means for forming the corrugate 511 on the filter material 510. However, the filter material 510 may be torn due to the engagement of the gear 530. Therefore, the filtering performance may be deteriorated.

Further, the adhesive 551 is applied to the corrugate 511. Therefore, the filtering performance may be deteriorated due to an insufficient sealing force caused by an inconsistent application of the desired amount of the adhesive 551.
EP 0 955 078 A1 discloses a fluid filtering member in accordance with the preamble of claim 1.

### SUMMARY OF THE INVENTION

It is an object of the invention to supply a fuel filtering member having and enhanced stability and an improved durability and reliability.

The above described object is solved by a fluid filtering member according to claim 1. The fuel filtering member is provided with three layers, including a dense layer, with rough layers connected to both surfaces of the dense layer and serving as a passage. Large-scale equipment may not be required for processing the corrugate or for rolling the filter material, or for applying the adhesive thereto. Therefore, processing can be simplified. Further, the filter material can be prevented from being torn due to forming a corrugate and connecting adjacent filter materials. Further, a fuel passage can be assured by employing the filter material formed of the dense layer and the rough layers. Therefore, an additional passage is not required. Further, heat-welding of materials can be easily performed by using material with a low melting point to form the rough layers.

### BRIEF DESCRIPTION OF THE DRAWINGS

Fig. 1 is a cross sectional view in a thickness direction of a filter material according to the invention;
Fig. 2 is a schematic view illustrating a manufacturing device for manufacturing a fuel filtering member according to the invention;
Fig. 3 is an enlarged cross sectional view of a heat welding portion according to the invention;
Fig. 4 is a schematic view illustrating the other manufacturing device for manufacturing the fuel filtering member according to the invention;
Fig. 5 is an enlarged cross sectional view illustrating a heat welding portion of the other manufacturing device illustrated in Fig. 4;
Fig. 6 is a cross sectional view of a fuel filtering apparatus according to a related art;
Fig. 7 is a partially enlarged cross sectional view of the related art of Fig. 6; and
Fig. 8 is a schematic view illustrating a manufacturing device for manufacturing the related art of Fig. 6.

### DETAILED DESCRIPTION OF PREFERRED EMBODIMENTS

Preferred embodiments of the invention will be described with reference to the attached drawings.

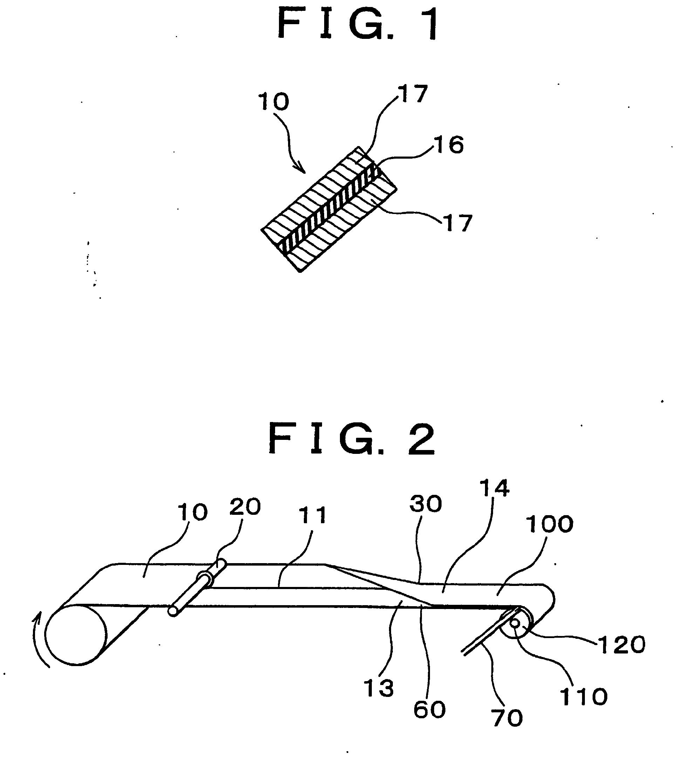

A filtering member according to a first embodiment of the present invention is described with reference to Figs. 1, 2, and 3. The present invention is not intended to be limited to a fuel filtering member. However, a liquid filtering member employed as the fuel filtering member is described as a preferred embodiment of the invention.

Referring to the enlarged cross sectional view illustrated in Fig. 1, a filter material 10 is provided with a dense layer 16 at a central portion in a width direction of the filter material 10 and two rough layers 17 in which the dense layer 16 is sandwiched by and fixed to the rough layers 17. The filter material as a whole forms three layers. The rough layers 17 can effect a filtering performance whereby foreign particles over a predetermined size are filtered. The rough layers 17 are sufficiently rough, however, so as effect the flow of commonly used fuel. Further, the rough layers 17 should have a melting point low enough so as to be melted at a low heat. On the other hand, the dense layer 16 is required to have a more effective filtering performance than the rough layers 17 and should have a higher melting point than the melting point of the rough layers 17.

A filter paper, or a non-woven fabric, for example, is selected as a material of the filter material 10. It is preferable that the non-woven fabric for the filter material 10 is made of a combination of a raw fiber and an adhering fiber. The raw fiber is made of a fiber, for example polyester, polypropylene, rayon, glass, and acetate fiber. The adhering fiber is made of a fabric, for example polyester, polypropylene, rayon, glass, and acetate fiber, of which surfaces are respectively coated with a resin having a low melting point, for example deformation polyester, deformation polyethylene, or deformation polypropylene. The fuel filtering member 10 is entirely made of the combination of the row fiber and the adhering fiber. The dense layer 16 made of the material with a higher density than the material of the rough layers 17 can be provided with a more effective filtering function than the rough layers 17.

As illustrated at the left in Fig. 2, the filter material 10 is supplied for the manufacturing process with a rolled structure. A filtering member 120 is formed by primarily straining a sheet of the rolled filter material 10. The filter material 10 is applied with a pushing force of a streaking means 20 in a thickness direction of the filter material 10 at the central portion in a width direction thereof. Therefore, the filter material 10 is provided with a streak 11 at the central portion in the width direction so as to be easily folded in a longitudinal direction of the filter material 10. The filter material 10 is then folded by a not-shown folding means along the streak 11 so as to fold a one side 14 in the width direction of the filter member 10 on the other side 13 in the width direction thereof.

The folded filter material 10 includes a folded portion 30, the one side 14 and the other side 13. The one side 14 and the other side 13 are elongated to both sides of the folded portion 30. Further, the folded filter material 10 is rolled by a core 110 in a spiral manner as a cross sectional V-shaped member 100 having an opening portion 60 at an opposite the folded portion 30. The fuel filtering member 120 is formed by cutting the folded filter material 10 by a predetermined length. When the V-shaped member 100 is rolled in the spiral manner, the one side 14 of the filter material 10 is arranged at an outer side of the spiral and the other side 13 is arranged at an inner side thereof. Therefore, the V-shaped member 100 forming the fuel filtering member 120 has both closed sides and an opening end so as to form a kind of sack.

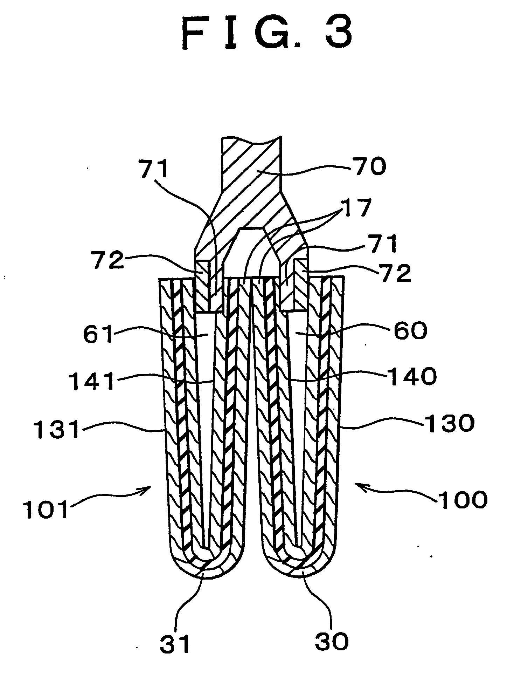

As illustrated in Fig. 3, the rough layer 17 at the opening edge of the V-shaped member and the rough layer 17 at the opening edge of the other V-shaped member are connected by heat-welding. A cross sectional V-shaped member 101 illustrated at the left in Fig. 3 is at a stage immediately before being rolled by the core 110. The V-shaped member 100 illustrated at the right in Fig. 3 has been already rolled and is positioned at the most outer position of the spiral. An iron 70 as a heat welding means forms a heat welding portion 71 at an inner side of an edge portion of the iron 70. The heat welding portion 71 has actually a small size, for example approximately several millimeters. An outer side of the iron 70 is applied with an adiabatic process so as to form a non-heating portion 72.

Upon the heat-welding process of the V-shaped bodies 100, 101, an inner surface 131 (a right edge of the V shape) of the V-shaped member 101 and an outer surface 140 (a left edge of the V shape) of the V-shaped member 100 are clipped by means of the heat welding portion 71 by inserting tip ends of the iron 70 into the opening portion 60 and an opening portion 61. Therefore, the inner surface 131 and the outer surface 140 are connected by the heat-welding. The core 110 has been continuously rotated so that the filtering member 120 can be rolled at any time. A clipping force of the heat welding portion 71 is set to be a force to allow a slipping of the heat-welded portion between the V-shaped bodies 100, 101. The iron 70 is moved in a radial direction in response to an increase of a radial length of the filter material 10 rolled by the core 11.

The opening portions 60, 61 are clearly described in Fig. 3. However, the opening portions 60, 61 are little when the filter material 10 is actually rolled by the core 110. As described above, the rough layers 17 function as the fuel passage. After the filter material 10 is rolled by the core 110, the two relative rough layers 17 defining the opening portions 60, 61 become in contact with each other. As a result, the fuel passage is defined between the two rough layers 17 so as to allow sufficient flow of the fuel.

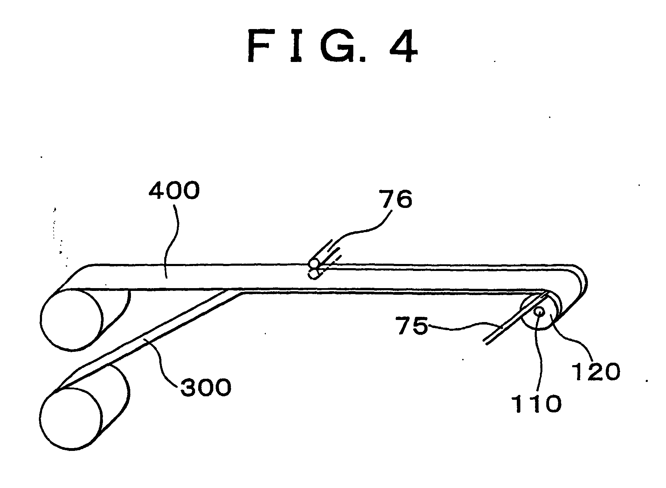

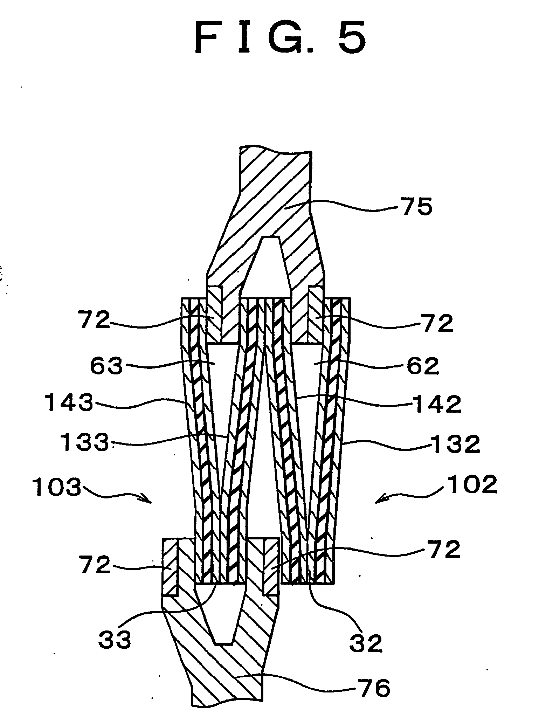

Next, the filtering member according to a second embodiment of the invention is described with reference to Figs. 4, 5.

The filter material employed according to the second embodiment is identical to the filter material illustrated in Fig. 1. The second embodiment is different from the first embodiment with respect to a manufacturing method of the fuel filtering member. The fuel filtering member according to the first embodiment is formed by folding the filter material along the streak at the central portion in the width direction thereof. However, the fuel filtering member according to the second embodiment is formed by employing two filter materials 300, 400 which has been separated beforehand. Each filter material 300, 400 according to the second embodiment is identical to the filter material 10 according to the first embodiment with respect to forming three layers including the dense layer and the rough layers sandwiching the dense layer therein, employing the filter paper or the non-woven fabric, for example, as the material thereof. It is preferable that the non-woven fabric for the filter material 10 is made of a combination of a raw fiber and an adhering fiber. The raw fiber is made of a fiber, for example polyester, polypropylene, rayon, glass, and acetate fiber. The adhering fiber is made of a fabric, for example polyester, polypropylene, rayon, glass, and acetate fiber, of which surfaces are respectively coated with a resin having a low melting point, for example deformation polyester, deformation polyethylene, or deformation polypropylene.

A manufacturing device illustrated in Fig. 4 is employed for forming the fuel filtering member 120. The filter materials 300 and 400 as the rolled sheets are strained and are rolled in the spiral manner by the core 110. The rolled filter materials 300 and 400 are cut to a predetermined length so as to form the fuel filtering member 120. As illustrated in Figs. 4, 5, irons 75, 76 (heat welding means) with separated edge portions are employed for connecting relative rough layers 17 by the heat-welding, respectively.

Fig. 5 shows the condition in which two cross sectional V-shaped bodies 102, 103 being substantially identical to the V-shaped bodies 100, 101 shown in Fig. 3, for example, are formed by heat-welding the filter materials 300, 400. The iron 76 (the heat welding means) is employed for forming either the V-shaped member 102 or the V-shaped member 103. That is, the iron 76 is employed for heat-welding either a bottom portion 32 of the V-shaped body 102 or a bottom portion 33 of the V-shaped body 103. Therefore, the iron 76 is employed in a different way from the iron 75 for connecting the V-shaped bodies 102, 103. The two irons 75, 76 can be positioned as illustrated in Fig. 5. However, the heat-welding by the iron 76 is performed at an earlier stage than the welding by the iron 75. The heat Welding by the iron 75 is substantially same as the first embodiment. That is, the V-shaped member 103 is on a stage immediately before being rolled by the core 110. On the other hand, the V-shaped member 102 has been already rolled by the core 110 and is positioned at the most outer portion of the spiral. As illustrated in Fig. 5, an inner surface 133 (a right edge of the V shape) of the V-shaped member 103 and an outer surface 142 (a left edge of the V shape) of the V-shaped member 102 are clipped by means of a heat welding portion by inserting tip ends of the iron 75 into the opening portions 62, 63 so as to heat-weld the clipped portion. The iron 76 is not required to be movable. The iron 76 is required to have a clipping force to allow a slipping of the welded surface of the V-shaped bodies 102, 103.

The second embodiment can generate the same effect as the first embodiment of the invention. Further, the manufacturing cost for manufacturing the fuel filtering member 120 can be reduced by omitting the folding process.

According to the above described embodiments of the present invention, the filtering member is described as the fuel filtering member. However, the filtering member is not intended to be limited to the fuel filtering member. Rather any filtering member employed as a spiral type filter can be applicable.

The invention is not intended to be limited to the particular embodiments disclosed. Variations and changes may be accepted without departing from the spirit of the invention.

According to the second embodiment of the invention, the known corrugate processing and rolling process of applying the adhesive are not required. Therefore, the manufacturing process can be simplified and the required time for manufacturing can be shortened. Therefore, the manufacturing cost can be reduced.

Further, durability and reliability of the fuel filtering member can be improved by preventing the filter material from being torn due to forming the corrugate thereon.

Further, the rolled filter material is provided with the dense layer and the rough layers so as to assure the fuel passage. Therefore, an additional passage is not required.

Further, the filter paper, or the non-woven fabric, for example, is selected as the filter material. Therefore, the fuel passage can be easily assured by selecting the density of the rough layer and the dense layer. Further, the heat-welding can be performed easily by using material having a low melting point for the rough layers.

While the invention has been described with reference to preferred embodiments thereof, it is to be understood that the invention is not limited to the disclosed embodiments or constructions. On the contrary, the invention is intended to cover various modifications and equivalent arrangements. In addition, while the various elements of the disclosed invention are shown in various combinations and configurations, which are exemplary, other combinations and configurations, including more, less or only a single element, are also within the spirit and scope of the invention.

## Claims

1. A fluid filtering member comprising:
a filter material (10) having three layers;
one of the three layers being a dense layer (16) having first and second surfaces, the dense layer (16) performing a more effective filtering function than the remaining layers;
the remaining layers being a pair of rough layers (17) connected to the first and second surfaces of the dense layer (16), the pair of rough layers (17) functioning as a fluid passage and providing a coarse filtration of the fluid, and
the filter material (10) being formed as a V-shaped member (100, 101, 102, 103) having an opening (60, 61, 62, 63) and is rolled in a spiral manner, **characterized in that**
the rough layer (17) located at an opening edge of one V-shaped member (100, 102) rolled in the spiral manner is connected to the rough layer (17) at the opening edge of an adjacent V-shaped member (101, 103) to form the fluid filtering member.

2. A fluid filtering member according to claim 1, wherein the filter material (10) is formed as a sack.

3. A fluid filtering member according to claim 1, wherein the filter material (10) is folded to form the V-shaped member.

4. A fluid filtering member according to claim 1, wherein the dense layer (16) and the pair of rough layers (17) are comprised of two different materials, each layer having edge portions that connect the layers to each other in a longitudinal direction, the connected layers being folded to form a V-shaped member (102, 103) having a folded portion (32, 33) and an opening (62, 63), the opening (62, 63) being formed by a pair of edges of the connected layers extending opposite the folded portion (32, 33)

5. A fluid filtering member according to any one of claims 1 through 4, wherein a heat -welded connection joins adjacent V-shaped members.

6. A fluid filtering member according to any of claims 1 through 5, wherein the filter material (10) is comprised of at least one of a filter paper and a non-woven fabric.

7. A fluid filtering member according to any one of claims 1 through 6, wherein the pair of rough layers (17) is comprised of a heat fused material having a melting point lower than a melting point of the dense layer (16).

## Patentansprüche

1. Ein Fluidfilterteil, das Folgendes aufweist:
ein Filtermaterial (10), das drei Lagen umfasst;
wobei eine der drei Lagen eine dichte Lage (16) ist, die erste und zweite Oberflächen aufweist, wobei die dichte Lage (16) eine effektivere Filterfunktion als die anderen Lagen hat;
während die verbleibenden Lagen ein Paar von rauen Lagen (17) sind, die mit den ersten und zweiten Oberflächen der dichten Lage (16) verbunden sind, wobei das Paar von rauen Lagen (17) als ein Fluiddurchlass arbeitet und das Fluid grob filtert, und
das Filtermaterial (10) als ein V-förmiges Teil (100, 101, 102, 103) gebildet ist, das eine Öffnung (60, 61, 62, 63) aufweist und in einer spiraligen Weise gerollt ist, **dadurch gekennzeichnet, dass**
die raue Schicht (17), die an einer Öffnungskante eines V-förmigen Teils (100, 102) angeordnet ist, das in der spiralförmigen Weise gerollt ist, mit der rauen Schicht (17) an der Öffnungskante eines benachbarten V-förmigen Teils (101, 103) verbunden ist, um das Fluidfilterteil zu bilden.

2. Ein Fluidfilterteil nach Anspruch 1, wobei das Filtermaterial (10) als ein Sack geformt ist.

3. Ein Fluidfilterteil nach Anspruch 1, wobei das Filtermaterial (10) gefaltet ist, um das V-förmige Teil zu bilden.

4. Ein Fluidfilterteil nach Anspruch 1, wobei die dichte Schicht (16) und das Paar von rauen Schichten (17) aus zwei unterschiedlichen Materialien bestehen, wobei jede Schicht Kantenabschnitte aufweist, welche die Schichten miteinander in einer Längsrichtung verbinden, während die verbundenen Schichten gefaltet sind, um ein V-förmiges Teil (102, 103) zu bilden, das einen gefalteten Abschnitt (32, 33) und eine Öffnung (62, 63) aufweist, wobei die Öffnung (62, 63) durch ein Paar von Kanten der verbundenen Schichten gebildet ist, die sich gegenüber dem gefalteten Abschnitt (32, 33) erstrecken.

5. Ein Fluidfilterteil nach einem der Ansprüche 1 bis 4, wobei eine unter Hitze verschweißte Verbindung die benachbarten V-förmigen Teile verbindet.

6. Ein Fluidfilterteil nach einem der Ansprüche 1 bis 5, wobei das Filtermaterial (10) mindestens entweder aus einem Filterpapier oder einem nicht gewebten Stoff besteht.

7. Ein Fluidfilterteil nach einem der Ansprüche 1 bis 6, wobei das Paar von rauen Schichten (17) aus einem durch Wärme verbundenen Material besteht, das einen Schmelzpunkt aufweist, der niedriger als ein Schmelzpunkt der dichten Schicht (16) ist.

## Revendications

1. Elément de filtration de fluide comprenant :
un matériau de filtre (10) ayant trois couches ;
l'une des trois couches étant une couche dense (16) ayant une première et une deuxième surfaces, la couche dense (16) réalisant une fonction de filtration plus efficace que les couches restantes ;
les couches restantes étant une paire de couches brutes (17) connectée à la première et à la deuxième surfaces de la couche dense (16), la paire de couches brutes (17) fonctionnant comme un passage de fluide et fournissant une filtration grossière du fluide, et
le matériau de filtre (10) étant formé comme un élément en forme de V (100, 101, 102, 103) ayant une ouverture (60, 61, 62, 63) et roulé d'une façon spiroïde, **caractérisé en ce que**
la couche brute (17) placée à un bord d'ouverture d'un élément en forme de V (100, 102) roulé de la façon spiroïde est connecté à la couche brute (17) au bord d'ouverture d'un élément adjacent en forme de V (101, 103) pour former l'élément de filtration de fluide.

2. Elément de filtration de fluide selon la revendication 1, dans lequel le matériau de filtre (10) est formé comme un sac.

3. Elément de filtration de fluide selon la revendication 1, dans lequel le matériau de filtre (10) est plié pour former l'élément en forme de V.

4. Elément de filtration de fluide selon la revendication 1, dans lequel la couche dense (16) et la paire de couches brutes (17) sont formées de deux matériaux différents, chaque couche ayant des parties de bord qui connectent les couches l'une à l'autre dans une direction longitudinale, les couches connectées étant pliées pour former un élément en forme de V (102, 103) ayant une partie pliée (32, 33) et une ouverture (62, 63), l'ouverture (62, 63) étant formée au moyen d'une paire des bords des couches connectées s'étendant à l'opposé de la partie pliée (32, 33).

5. Elément de filtration de fluide selon l'une quelconque des revendications 1 à 4, dans lequel une connexion soudée par la chaleur se raccorde aux éléments en forme de V.

6. Elément de filtration de fluide selon l'une quelconque des revendications 1 à 5, dans lequel le matériau de filtre (10) est composé d'au moins un d'un papier filtre et d'un tissu non tissé.

7. Elément de filtration de fluide selon l'une quelconque des revendications 1 à 6, dans lequel la paire de couches brutes (17) est composée d'un matériau fondu par la chaleur ayant un point de fusion inférieur à un point de fusion de la couche dense (16).
